# EUROPÄISCHE PATENTSCHRIFT

(11) **EP 0 621 673 B1**
(45) Veröffentlichungstag und Bekanntmachung des Hinweises auf die Patenterteilung: **15.01.1997**
(21) Anmeldenummer: 94104930.6
(22) Anmeldetag: 29.03.1994
(51) Int. Cl.: H02G 5/08

(54) **Abgangs- und Anschlusskasten für Stromschienen in Niederspannungs-Schienenverteilern**
Outlet and connection box for bus bars used in low voltage busways
Boîte de sortie et connexion pour barres conducteurs de répartiteurs basses tensions

(30) Priorität: 20.04.1993 DE 4312702
(43) Veröffentlichungstag der Anmeldung: 26.10.1994
(73) Patentinhaber: Klöckner-Moeller GmbH, 53115 Bonn (DE)
(72) Erfinder: Müller, Reinhard, D-50321 Brühl-Vochem (DE)

(56) Entgegenhaltungen:
- EP-A- 0 437 758
- DE-B- 1 131 769

## Beschreibung

Die Erfindung betrifft einen Abgangs- oder Anschlußkasten nach dem Oberbegriff des Anspruches 1.

In der Energieverteilung sind Stromschienensysteme, auch Schienenverteiler genannt, zum Transport und zur Verteilung elektrischer Energie seit langem bekannt und bewährt.

Typische Aufgaben dieser Schienensysteme können die Verbindung von einem Transformator über einen Hauptverteiler zum Unterverteiler sein, die Versorgung von Hochhausetagen oder die Versorgung von Großverbrauchern sein.

Insbesondere in Fabrikbetrieben, in denen Stromverbraucher oft gewechselt werden müssen, werden Schienenverteiler mit starren Stromschienen, in der Regel Flachschienen, eingesetzt.
Der Stromabzweig wird mittels Abzweigkästen realisiert, die ein Kontaktorgan zur elektrischen Verbindung der Stromschienen aufweisen.
Die Abzweigkästen weisen Schalt- oder Schutzgeräte oder aber auch Schmelzsicherungen auf, die den Abzweigleitungen zwischengeschaltet sind, insbesondere werden hierfür NH-Sicherungen mit entsprechenden Kontakt- und Schutzgehäusen eingesetzt, auch NH-Sicherungslasttrenner genannt.

Ein Abgangskasten dieser Art darf nicht abnehmbar sein, solange dieser zugeschaltet ist.

Aus der DE-AS 11 31 769 ist ein Abgangskasten bekannt geworden, bei dem zwangsläufig die an einem Drehdeckel befestigten NH-Sicherungen beim Öffnen herausgezogen werden und erst dann die Befestigungsmittel betätigbar sind. Weiterhin ist ein Aufsetzen bei eingesetzten NH-Sicherungen nicht möglich.

Derartige Abgangskästen weisen übicherweise einen Anschlußraum auf, der möglichst nur spannungsfrei zugänglich sein sollte.

Bei dem Abgangskasten der EP-OS 0 437 758 wird dies in einfacher Weise dadurch gelöst, daS der Anschlußraum nur über einen Schiebedeckel zugänglich ist, der sich nur verschieben läßt, wenn ein im Geräteraum vorhandener NH-Sicherungsträger herausgenommen ist.

Hierbei wird aber nicht ausgeschlossen, daß die Anschlußkontakte der NH-Sicherungen durch Stromlaschen oder sonstige Überbrückungselemente unzulässigerweise überbrückt werden und die Schutzvorrichtung überlistet bzw. umgangen wird.

Damit während der Montagearbeit keine unter Spannung stehende Teile berührt werden können, ist in dem Abgangskasten der EP-OS 0 437 758 ein mit mehreren Hängeschlößern abschließbarer Riegel vorhanden, der den Schiebedeckel blockierend hintergreift. Es ist hierbei nachteilhafterweise der Zuverlässigkeit des Personals überlassen, ob eine Abschließung erfolgt oder nicht.

Aufgabe der Erfindung ist es deshalb, einen Abgangs- oder Anschlußkasten nach dem Oberbegriff des Anspruches 1 oder Nebenanspruches 6 zu schaffen, bei dem weder spannungsführende Teile berührbar sind, noch der Abgangskasten bei aktiven Schutzorganen, wie vorhandenen NH-Sicherungen oder eingeschalteten Schaltgeräten, abnehmbar ist und zwar unabhängig von der Zuverlässigkeit des Bedienpersonals.

Die Aufgabe der Erfindung wird durch die kennzeichnenden Merkmale des Anspruches 1 gelöst, weiterhin wird die Aufgabe durch Merkmale des Nebenanspruches 6 gelöst, während in den Unteransprüchen besonders vorteilhafte Weiterbildungen der Erfindung gekennzeichnet sind.

Durch die Erfindung entsteht ein zwangsläufiger Ablauf bei der Montage des Abgangskasten auf dem Schienenkanal, so daß die Montage sicher und unabhängig von der Zuverlässigkeit des Montagepersonals ist.

Eine einfache Verriegelung der Befestigungselemente wird erreicht, indem der Riegel in einen Ausbruch eines Betätigungsteiles zur Betätigung der Befestigungselemente eintauchbar ist.

Die Handhabung wird verbessert, wenn der Riegel oben mit einer Handhabe versehen und als Verriegelungs- und Handhabunsstange ausgeführt sind.

Besonders sicher ist es, wenn der Riegel doppelseitig unter Federdruck steht und in der Ruhestellung sowohl in den Ausbruch eingetaucht ist als auch den Schiebedeckel sperrend hintergreift, wodurch nach dem Verschieben des Schiebedeckels in Richtung des Geräteraumes gleichzeitig der Schiebedeckel und die Befestigungselemente blockiert sind.

Besonders günstig ist es, wenn der Riegel kippbar und in der Kipposition einhängbar ist, weil ein Zurücktauchen des Riegels in dieser Stellung nicht mehr möglich ist, wobei der Riegel automatisch in die senkrechte Lage gelangt, wenn er durch eine an dem Betätigungsteil angeordnete Rückstellkante aus der Kipposition verschiebbar ist.

Ferner ist es vorteilhaft, wenn die Befestigungselemente als Befestigungsbügel ausgeführt sind, die in eine Vertiefung des Schienegehäuses greifen und die Befestigungselemente drehbar bzw. um eine zum Abgangskastenboden senkrechte Achse schwenkbar sind, weil eine sichere Befestigung bei geringem Montageaufwand entsteht.

Für die Befestigung und Handhabung ist es günstig, wenn die Schwenkbewegung der Befestigungsbügel durch eine exzentrisch angeordnete Lagerstelle bewirkt wird.

Durch die Merkmale des Nebenanspruches 6 wird in einfacher Weise verhindert, daß spannungsführende Teile im Anschlußraum während der Montage unter Spannung stehen, wobei ein Überbrücken der NH-Sicherungen nicht möglich ist. Weiterhin wird verhindert, daß ein Auf- oder Entfernen des Abgangskastens mit NH-Sicherungen nicht möglich ist.

Besonders günstig ist es, wenn das eintauchbare Element oder die Abtastfinger durch eine Drehbewegung eintauchbar sind, wodurch sich eine einfache Handhabung ergibt.

Von besonderem Vorteil ist es, wenn die eintauchbaren Elemente oder Abtastfinger an einem U-förmigen Abtastteil mit nach unten angeordneten bogenförmigen Seitenschenkeln befestigt sind, wobei die Seitenschenkel sich an einer zum Deckel parallelen Fläche abstützen können, weil ein Absinken des Abtastteiles bei fehlenden NH-Sicherungen in einfacher Weise möglich ist und die Schutzvorrichtung dann unter dem Schiebedeckel platzsparend angeordnet ist.

Wird einerseits eine flache und platzsparende Ausgestaltung der Schutzvorrichtung erreicht, wenn die Abtastfinger an einem Abtastteil befestigt sind wobei das Abtastteil über zwei hintereinander angeordnete Lagerstellen beweglich ist, so ergibt sich andererseits der Vorteil, daß die Abtastfinger relativ weit von der blockierenden Kante angeordnet werden können.

Damit sich eine einfache und wirksame Blockierung ergibt, besteht die Schutzvorrichtung aus einem etwa über der Trennwand angeordneten Halteprofil, einem schwenkbar befestigen Blockierteil mit zwei Seitenabschnitten und einem Querabschnitt, wobei die Seitenabschnitte jeweils mit einem Einschnitt versehen sind, der eine den Schiebedeckel blockierenden Kante aufweist.

Weiterhin besonders günstig ist es, wenn ein Blockierteil der Schutzvorrichtung eine Kante aufweist, die nach innen abgerundet ist, derart, daß der Schiebedeckel in jeder blockierten Stellung senkrecht an die Kante anstößt, wodurch keine durch das Anstoßen des Schiebedeckels ausgelöste Bewegung des Blockierteiles erfolgt.

Anhand der Zeichnung, in der ein Ausführungsbeispiel dargestellt ist, sollen die Erfindung, weitere Ausgestaltungen und Verbesserungen der Erfindung und weitere Vorteile näher beschrieben und erläutert werden.

Es zeigt:
- Fig. 1: eine perspektivische Darstellung des Abgangskastens zusammengesetzt,
- Fig. 2: eine perspektivische Darstellung der Bodengruppe mit Aufbauten,
- Fig. 2b: eine weitere Darstellung der Bodengruppe,
- Fig. 3: eine Prinzipdarstellung der Schutzvorrichtung im Blockierzustand,
- Fig. 4: eine Prinzipdarstellung der Schutzvorrichtung im Freigabezustand,
- Fig. 5: eine teilweise auseinandergezogene, perspektivische Darstellung des Bodenteiles mit Befestigungselementen,
- Fig. 6a-e: jeweils eine perspektivische Darstellung der Verriegelungseinrichtung mit einem Schienenkanal in unterschiedlichen Verriegelungsstellungen,
- Fig. 7: eine perspektivische Darstellung der Haube mit einer teilweise auseinandergezogenen Schutzvorrichtung,
- Fig. 8: eine auseinandergezogene, perspektivische Darstellung des Zwischenteiles und des Deckels und

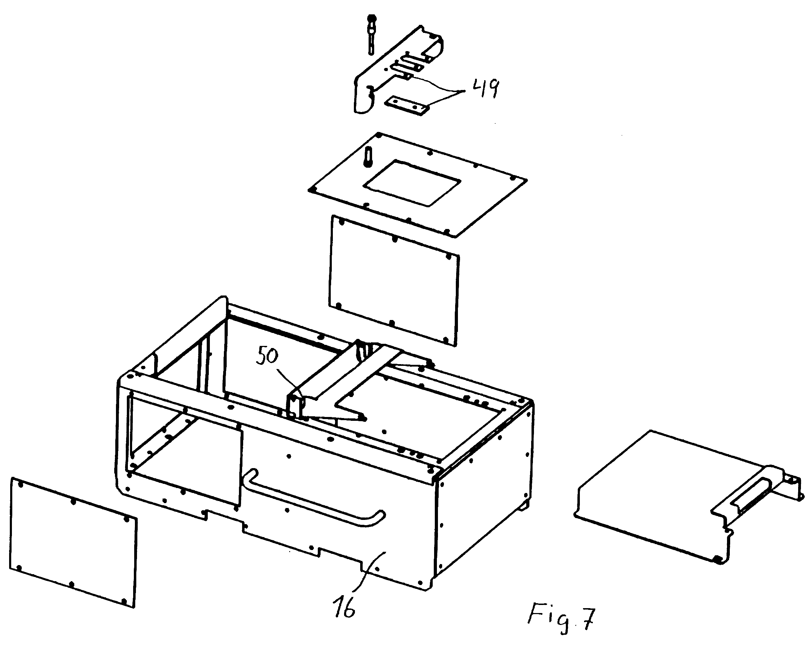

- Fig. 9: eine Darstellung des Sicherungslasttrenner.

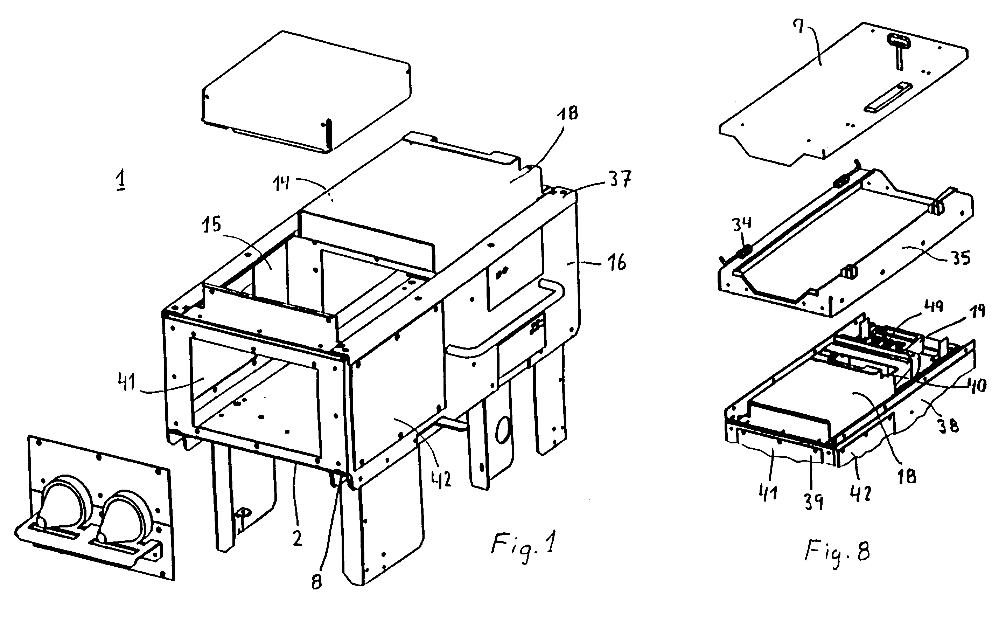

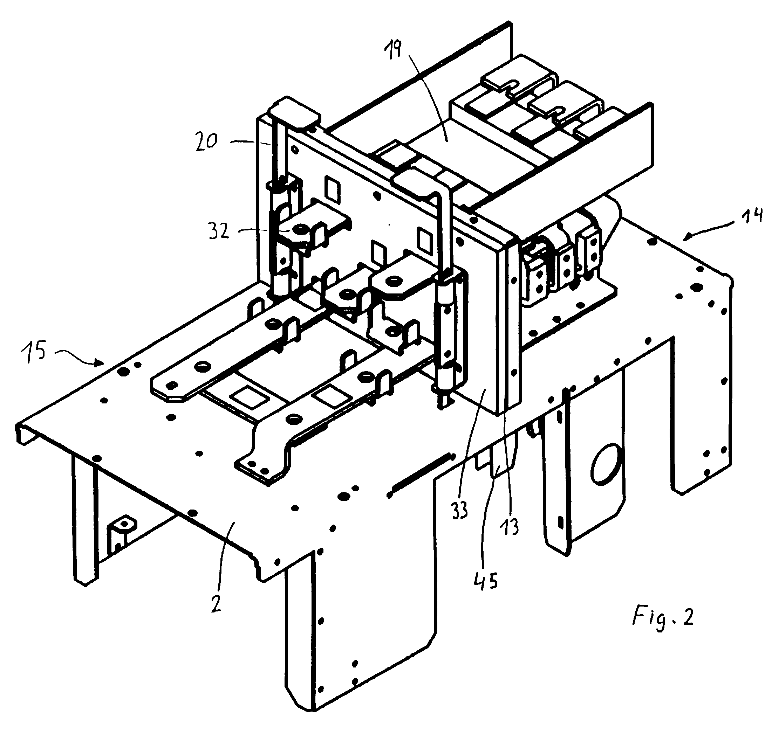

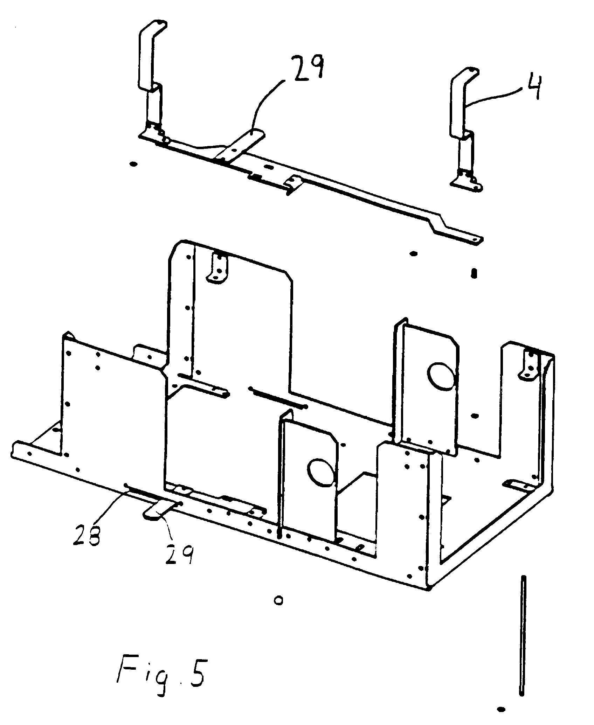

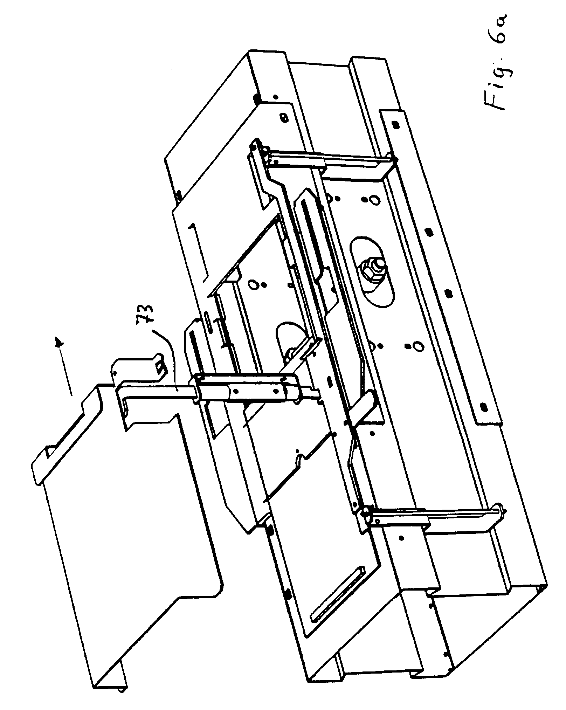

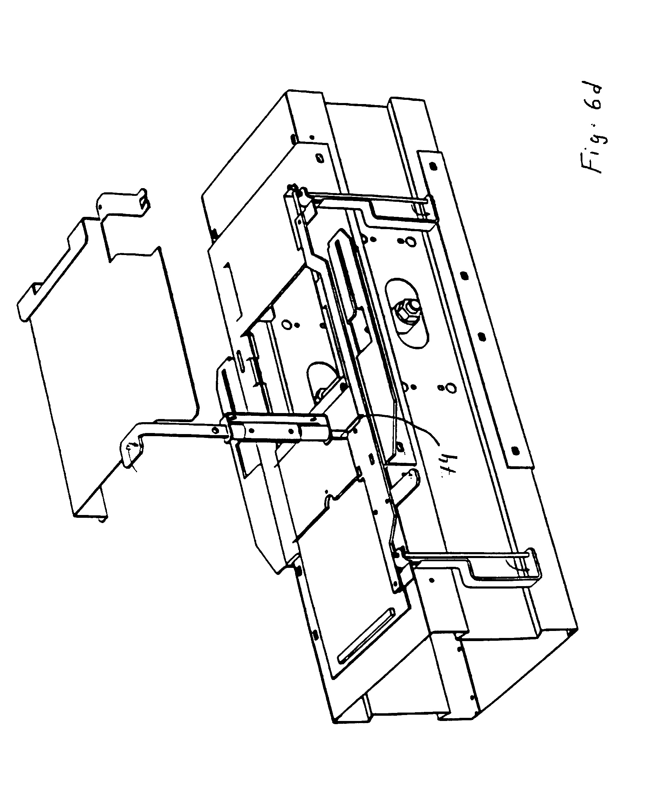

Wie die Fig. 1 zeigt, besteht der Abgangskasten 1 aus einer Bodengruppe (Fig. 2 und 5) mit offenen Seiten und einer die Bodengruppe 2 abdeckenden Haube 16 (Fig. 7), die auf die Bodengruppe 2 aufgesetz und daran befestigt wird.

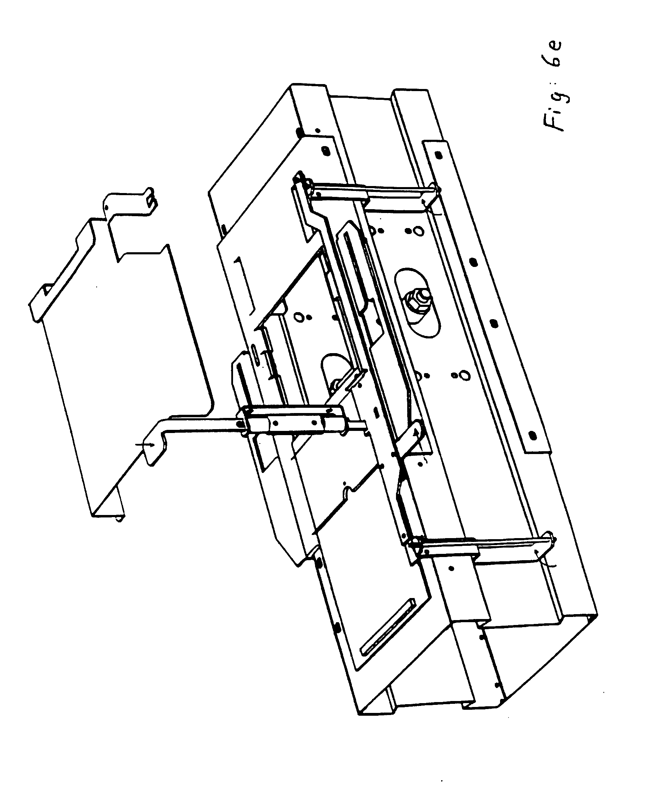

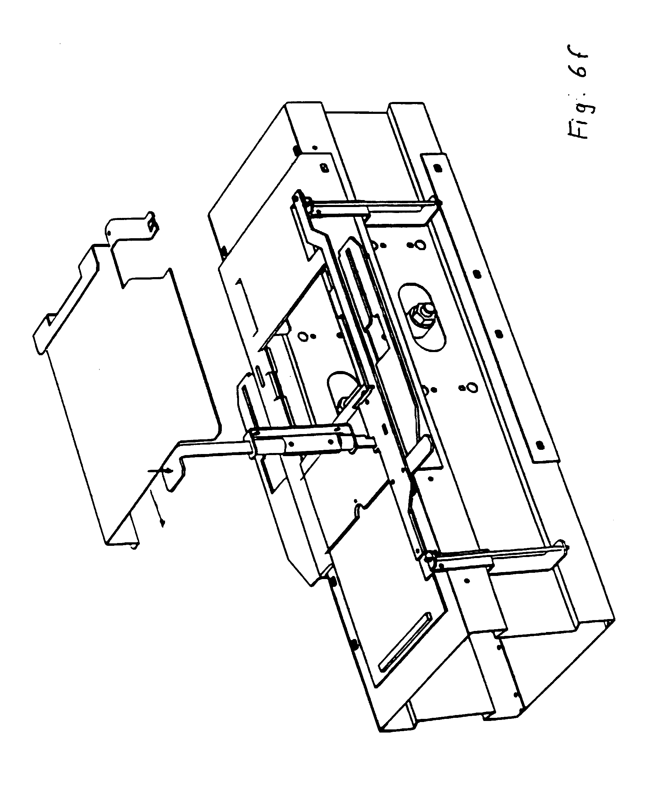

Der Abgangskasten 1 ist weiterhin in einem Geräteraum 14 und einem Anschlußraum 15 unterteilt, wobei die Räume von einer Trennwand 13 getrennt werden und durch einen abschließbaren, scharnierartig verbundenen Deckel 9 und einen Schiebedeckel 18 zugänglich sind (Fig. 8).

Auf dem Bodenteil 2 ist die Trennwand 13 mittels Schrauben befestigt, die den Abgangskasten 1 in den Geräteraum 14 und den Anschlußraum 15 unterteilt. Die Trennwand 13 weist in der Mitte einen Ausbruch 31, wie in der Fig. 1 zu sehen ist. Dort gehen die Anschlußschienen 32 von dem Geräteraum 14 in dem Anschlußraum 15 über. Die Anschlußschienen 32 werden von einer Isolierplatte gestützt, die an der Trennwand 13 befestigt ist.

An den Seitenwänden der Haube 16 sind Öffnungen 41, 42 an der Anschlußraumseite für die Kabeltüllen 43 der Abgangsleitungen vorhanden, die wahlweise verwendet werden können oder auch abgedeckt sein können, wie die Figuren 1 und 8 zeigen.

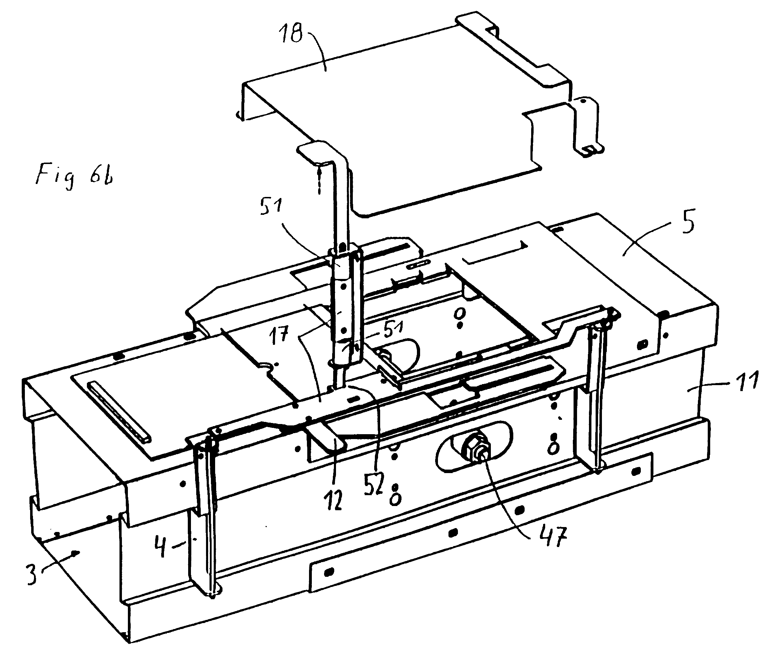

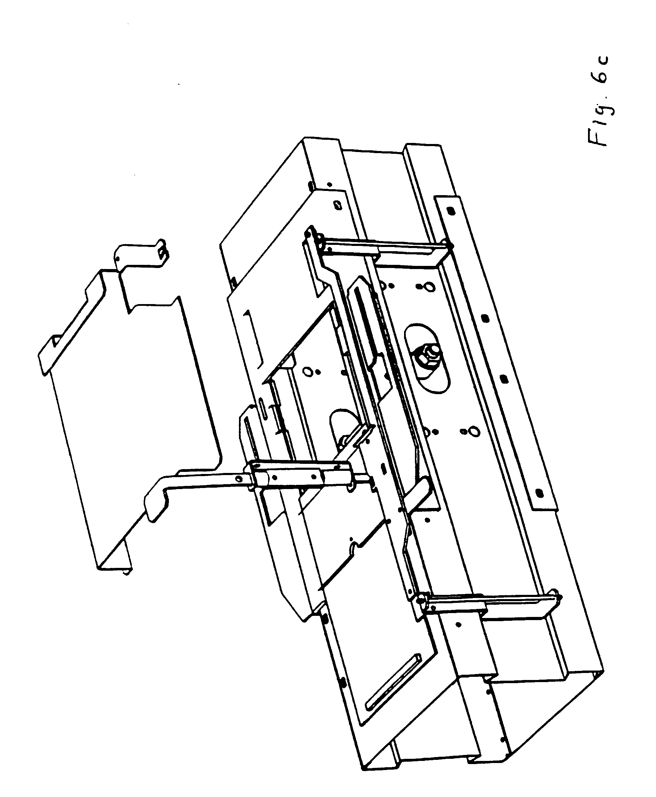

Als Befestigungselemente 4 für die Befestigung des Abgangskastens 1 an dem Schienenkanal 3 dienen drehbare U-förmige Befestigungsbügel, die in eine ebenfalls U-förmige Vertiefung 11 des Schienengehäuses mittels eines Betätigungsteiles 12 hereingeschwenkt werden, wie in den Figuren 5 und 6 gezeigt ist.

Die Befestigungsbügel sind der Bodengruppe 2 zugeordnet, ebenso wie eine Verriegelungseinrichtung 17, die mit einem der Haube 16 zugeordneten Schiebedeckel 18 korrespondiert bzw. diesen sperrend hintergreifen kann. Der Schiebedeckel 18 deckt entweder den Geräteraum 14 oder den Anschlußraum 15 ab, wobei die Verriegelungseinrichtung 17 mit einer später ausführlich beschriebenen Schutzvorrichtung 40 derart wirkt, daß zum einen der Anschlußraum nur zugänglich ist, wenn keine NH-Sicherungen 19 im Geräteraum 14 befindlich sind und zum anderen es nicht möglich ist den Abgangskasten 1 in Betrieb zu nehmen, wenn die Befestigungsbügel 4 nicht hineingeschwenkt worden sind bzw. der Abgangskasten 1 nicht ordnungsgemäß fest mit dem Schienenkanal 3 verbunden ist.

Weiterhin sind die Befestigungselemente 4 bzw. Befestigungsbügel an dem einen Ende direkt an dem Boden des Abgangskasten gelagert und an dem anderem Ende an einem Lagerwinkel 21, welches mit einem Abschnitt 10 verbunden ist.

Die Verriegelung des Schiebedeckels 18 wird an jeder Seite durch eine L-förmige Verriegelungs- und Handhabungsstange 20 der Verriegelungseinrichtung 17 bewirkt, die an der Trennwand 13 befestigt ist und die mit dem Schiebedeckel 18 korrespondiert. Die Verriegelungs- und Handhabungsstange 20 der Verriegelungseinrichtung 17 ist in einem Ausbruch 52 des Betätigungsteiles 24 nur eintauchbar, wenn die Befestigungsbügel in Befestigungsposition angeordnet sind, wobei nur dann eine Abdeckung des Anschlußraumes 15 durch den Schiebedeckel 18 und eine Freigabe das Geräteraumes 14 zum Einsetzen von NH-Sicherungen durch eine nachstehend erläuterte Schutzvorrichtung 40 erfolgen kann.

Die Schwenkbewegung des Befestigungsbügels 4 wird durch ein Betätigungsteil 24 erreicht, das an eine exzentrisch angeordnete Lagerstelle 22 des Befestigungsbügels 4 greift. Das Betätigungsteil 24 wirkt mit der Verriegelungs- und Handhabungsstange 20. Sowohl das Betätigungteil 24 als auch die Verriegelungs- und Handhabungsstange 20 sind unabhängig von der Haube 16, d.h. sind nicht mit der Haube verbunden.

In dem Zwischenteil 35 der Haube 16 befindet sich der Schiebedeckel 18, der, wie in der Fig. 6 zu sehen ist, nicht mit der Verriegelungseinrichtung 17 verbunden ist, sondern nur durch Hinausragen über die Oberkante des Schiebedeckels 18 diesen blockiert bzw. sperrend hintergreift.
Der Schiebedeckel 18 wirkt, wie schon erläutert, weiterhin mit der Schutzvorrichtung 40, die erst den Schiebedeckel 18 freigibt, wenn keine NH-Sicherungen 19 oder sonstige Überbrückungsteile in dem NH-Sicherungsgehäuse vorhanden sind.

Im Folgenden wird anhand der Figuren, 6a bis 6f die Funktionsweise der Verriegelungseinrichtung 17 ausführlich erläutert.

Die Fig. 6a geht von der einem auf dem Schienengehäuse 5 befestigten Abgangskasten 1. Hierbei sind die Befestigungselemente 4 in die Vertiefung 11 hineingeschwenkt worden und in Greif- oder Befestigungsstellung.
Der Riegel 73 befindet sich unterhalb des über dem Anschlußraum 15 angeordneten Schiebedeckels 18 und wird von dem Schiebedeckel 18 entgegen der Federkraft heruntergedrückt gehalten, wobei der Riegel in dem Ausbruch eingetaucht ist und die Befestigungselemente somit blockiert sind.
Der Schiebedeckel 18 ist in der Figur 6a an seinem hinteren Anschlag, so daß der Riegel 73 nicht auftauchen kann.
Um den Schiebedeckel nach vorne verschieben und die Befestigungselemente 4 verschwenken zu können, müssen zuvor die NH-Sicherungen entfernt worden sein, da vor dem Schiebedeckel eine später erläuterte Schutzvorrichtung 40 vorhanden ist, die den Schiebedeckel in dieser Stellung hält.

Sind die NH-Sicherungen 19 entfernt worden, dann kann der Schiebedeckel 18 in Richtung des Geräteraumes 14 bewegt werden bis er vollständig den Geräteraum 14 abdeckt und diesen Berührungssicher macht, wie in der Fig. 6b gezeigt ist, wobei der unter Federdruck stehende Riegel 73 automatisch den Schiebedeckel 18 sperrend hintergreift.

Um die Befestigungselemente verschwenken zu können ist es weiterhin erforderlich, den Riegel, der in eine Kippstellung bewegbar ist, aus der Eintauchposition (Fig. 6a, 6b) in die Kippstellung (6c) zu bewegen, wobei der Riegel entgegen der Federkraft der oberen Feder zu bewegen ist und oben in der Kippstellung einhängbar ist, so daß der Riegel nicht wieder in den Ausbruch 52 eintauchen kann. In der eingehängten Stellung schwebt der Riegel 73 leicht über das Betätigungsteil 24.

Beim Verschwenken der Befestigungselemte 4 aus der Vertiefung 11 verschiebt bzw. verdreht eine Rückstellkante 74 des Betätigungsteiles 24 den Riegel automatisch wieder in die senkrechte Position, wie in der Fig. 6d gezeigt ist. In dieser Position kann der Riegel 73 nicht mehr in den Ausbruch 52 eintauchen, wobei in dieser Stellung der Befestigungselemente 73 ein Einsetzen von NH-Sicherungen durch den blockierten Schiebedeckel 18 nicht möglich ist.
Erst wenn die Befestigungselemente wieder verschwenkt worden sind, kann eine Freigabe des Schiebedeckels 18 erfolgen, wie aus de Figuren 6e und 6f zu erkennen ist, wobei der Riegel 73 automatisch wieder in das Betätigungsteil 24 blockierend eintaucht.

Bei Verwendung der Verriegelungseinrichtung 17 und der Schutzvorrichtung 40 ergibt sich ein zwangsläufiger Ablauf, der unabhängig vom Bedienungspersonal ist.

Der in dem Geräteraum 14 angeordnete Sicherungslasttrenner für die in der Figur 2 nur mit dem Bezugszeichen 19 angedeuteten NH-Sicherungen besteht aus einem Gehäuse 58 mit einer Abdeckung 59 und Kontakten 60 für die Anschlußfahnen der NH-Sicherungen, wie insbesondere in der Figur 8 dargestellt ist.

Die Schutzvorrichtung 40 besteht, wie in der Fig. 7 zu sehen ist, aus einem etwa über Trennwand 13 angeordneten Halteprofil 61, einem an dem Halteprofil 61 schwenkbar befestigten Blockierteil 62 mit zwei Seitenabschnitten 63 und einem Querabschnitt 64, wobei die Seitenabschnitte 63 jeweils mit einem Einschnitt 62 versehen sind, der eine den Schiebedeckel 18 blockierenden Kante aufweist. Weiterhin besteht die Schutzvorrichtung 40 aus einem mit dem Blockierteil 62 ebenfalls schwenkbar verbundenen Abtastteil 49, wobei das Abtastteil 49 insgesamt über zwei hintereinander angeordnete Lagerstellen 65, 66 beweglich ist.

Das Abtastteil 49 ist U-förmig mit nach unten angeordneten, bogenförmigen Seitenschenkeln, die sich an einer zum Deckel parallelen Fläche 67 abstützen können. Weiterhin ist das Abtastteil 49 mit isolierten Abtastfingern 70 und einer im rechten Winkel angeordneten Handhabungskante 70 versehen.

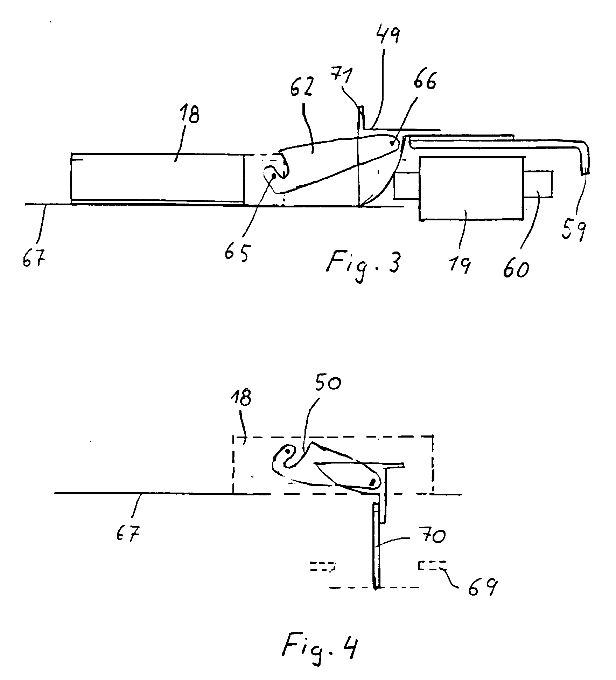

Die zweite Lagerstelle 66 ist im Abstand zum Grundschenkel 68 des Abtastteiles 49 angeordnet, so daß bei einer Drehbewegung des Abtastteiles 49 sich die 66 Lagerstelle und das Blockierteil 62 herabbewegen, wodurch die Kante 50 des Blockierteiles 62 unterhalb des Schiebedeckels 18 absinkt und der Schiebedeckel 18 in Richtung des Geräteraumes 14 verschiebbar ist, wie in der Figur 4 dargestellt ist.
Das Absinken wird weiterhin durch die Bogenform der Seitenschenkel des Abtastteiles 49 unterstützt, wodurch insgesamt die zweite Lagerstelle 66 weiter unten absinkt.

Die Kante 50 ist leicht nach innen abgerundet, derart, daß der Schiebedeckel in jeder blockierten Stellung senkrecht an die Kante 50 anstößt, also unabhängig von der Stellung der Abtastfinger und unabhängig davon, ob der Schiebedeckel durch eine vorhandene Abdeckung 59 oder NH-Sicherungen 19 blockiert wird.

Bei vorhandener Abdeckung 59, NH-Sicherungen 19 oder sonstigen zwischen den Anschlußfahnenkontakten 69 angeordneten Überbrückungsteilen ist ein vollständiges Herunterklappen (Fig.4) des Abtastteiles 49 nicht möglich.

Die Abtastfinger 70 tasten sozusagen den Aufnahmeraum der NH-Sicherungen 19 vollständig ab.

Die Schutzvorrichtung 40 wird weiterhin durch ein an dem Abtastteil 49 vorhandenes Befestigungselement 72 freigegeben, das in der Fig. 7 dargestellt ist.

Der Schiebedeckel 18 ist, wie in der Figur 6 gut zu sehen ist, U-förmig mit nach unten abgewinkelten Schenkeln und weist an den Schenkeln einstückig und parallel zum Bodenteil 2 fortgesetzten Führungsleisten auf.

Zur Bewegungsbegrenzung des Schiebedeckels 18 sind weiterhin in die Führungsnut hereinbiegbare Nasen 57 (Fig.1) vorhanden.

## Patentansprüche

1. Abgangs- oder Anschlußkasten (1) für Stromschienen in Niederspanungs-Schienenverteilern mit Befestigungselementen und mit einem Gehäuse, das durch eine Trennwand (13) in einem Geräteraum (14) und einem Anschlußraum (15) unterteilt ist, wobei ein Schiebedeckel (18) entweder den Geräteraum (14) oder den Anschlußraum (15) abdeckt und durch eine Verriegelungseinrichtung (17) sperrbar ist, **dadurch gekennzeichnet,** daß die Befestigungselemente (4) mit der Verriegelungseinrichtung (17) blockierbar sind, wobei ein Riegel (73) der Verriegelungseinrichtung (17) in der nicht blockierten Stellung (Fig. 6c,6d) der Befestigungselemente (4) den Schiebedeckel (18) sperrend hintergreift.

2. Abgangs- oder Anschlußkasten nach Anspruch 1, dadurch gekennzeichnet, daß der Riegel (73) in einen Ausbruch (52) eines Betätigungsteiles (24) zur Betätigung der Befestigungselemente (4) eintauchbar ist, daS der Riegel (73) oben mit einer Handhabe versehen und als Verriegelungs- und Handhabungstange (17) ausgeführt ist.

3. Abgangs- oder Anschlußkasten nach Anspruch 1 oder 2, dadurch gekennzeichnet, daß der Riegel (73) doppelseitig unter Federdruck steht und in der Ruhestellung sowohl in den Ausbruch (52) eingetaucht ist als auch den Schiebedeckel (18) sperrend hintergreift (Fig. 6b) und daß der Riegel (73) kippbar und in der Kipposition einhängbar ist (Fig. 6c).

4. Abgangs- oder Anschlußkasten nach einem der vorhergehenden Ansprüche, dadurch gekennzeichnet, daß der Riegel (73) durch eine an dem Betätigungsteil (24) angeordnete Rückstellkante (74) aus der Kipposition (Fig. 6c) in die senkrechte Lage (Fig. 6d) verschiebbar ist.

5. Abgangs- oder Anschlußkasten nach einem der vorhergehenden Ansprüche, dadurch gekennzeichnet, daß die Befestigungselemente (4) als Befestigungsbügel ausgeführt sind, die in eine Vertiefung (11) des Schienegehäuses greifen, daß die Befestigungselemente (4) drehbar bzw. um eine zum Abgangskastenboden senkrechte Achse schwenkbar sind und daß die Schwenkbewegung der Befestigungsbügel durch eine exzentrisch angeordnete Lagerstelle bewirkt wird.

6. Abgangs- oder Anschlußkasten (1) für Stromschienen in Niederspanungs-Schienenverteilern, insbesondere mit einer den Schiebedeckel (18) blockierenden Verriegelungseinrichtung (17) nach Anspruch 1, mit einer Schutzvorrichtung (40) zur Verhinderung der Berührung spannungsführender Teile und mit einem Gehäuse, das durch eine Trennwand (13) in einem Geräteraum (14) und einem Anschlußraum (15) unterteilt ist, wobei ein Schiebedeckel (18) entweder den Geräteraum (14) oder den Anschlußraum (15) abdeckt, **dadurch gekennzeichnet**, daß die Schutzvorrichtung (40) aus in den Aufnahmeraum zwischen den Anschlußfahnenkontakten (69) eintauchbaren Elementen oder Abtastfingern (70) besteht, die beim Eintauchen eine Freigabe und beim Auftauchen eine Blockierung des Schiebedeckels (18) bewirken.

7. Abgangs- oder Anschlußkasten nach Anspruch 6, dadurch gekennzeichnet, daß das eintauchbare Element oder die Abtastfinger (70) durch eine Drehbewegung eintauchbar sind.

8. Abgangs- oder Anschlußkasten nach Anspruch 6 oder 7, dadurch gekennzeichnet, daß die eintauchbaren Elemente oder Abtastfinger (70) an einem U-förmigen Abtastteil (49) mit nach unten angeordneten bogenförmigen Seitenschenkeln befestigt sind, wobei die Seitenschenkel sich an einer zum Deckel (9) parallelen Fläche abstützen können und daß die Abtastfinger (70) an einem Abtastteil befestigt sind, wobei das Abtastteil über zwei hintereinander angeordnete Lagerstellen (65, 66) beweglich ist.

9. Abgangs- oder Anschlußkasten nach einem der Ansprüche 6 bis 8, dadurch gekennzeichnet, daß die Schutzvorrichtung (40) aus einem etwa über der Trennwand (13) angeordneten Halteprofil (61), einem schwenkbar befestigen Blockierteil (62) mit zwei Seitenabschnitten (63) und einem Querabschnitt (64) besteht, wobei die Seitenabschnitte (63) jeweils mit einem Einschnitt (62) versehen sind, der eine den Schiebedeckel (18) blockierenden Kante aufweist und daß ein Blockierteil (62) der Schutzvorrichtung (40) eine Kante (50) aufweist, die nach innen abgerundet ist, derart, daß der Schiebedeckel (18) in jeder blockierten Stellung senkrecht an die Kante (50) anstößt.

## Claims

1. Distribution or connection cabinet (1) ) for bus bars in low-voltage bar distri butors with fixing elements and with a casing that is divided into an equipment compartment (14) and into a connection compartment (15) by means of a separating wall (13), with a sliding cover (18) covering either the equipment compartment (14) or the connection compartment (15) and being lockable by means of a blocking device (17), **wherein** the fixing elements (4) can be blokked by means of the blocking device (17) with one locking bar (73) of the blokking device (17) extending in a blocking way behind the sliding cover (18) in the unblocked position (figure 6c, 6d) of the fixing elements (4).

2. Distribution or connection cabinet as claimed in claim 1, **wherein** the locking bar (73) can extended into an opening (52) of an operating element (24) in order to operate the fixing elements (4), wherein the locking bar (73) is provided with a handle at its upper part, and is designed as a locking and operating lock (17).

3. Distribution or connection cabinet as claimed in claims 1 or 2, **wherein** the locking bar (73) is subjected to spring pressure from two sides and extends both into the opening (52) and in a blocking way behind the sliding cover (18) (figure 6b) in the position of rest, and wherein the locking bar (73) is tiltable and can be hung up in the tilted position (figure 6c).

4. Distribution or connection cabinet as claimed any of the above-mentioned claims, **wherein** the locking bar (73) can be displaced from the tilted position (figure 6c) into the vertical position (figure 6d) with the help of a reset edge (74) located on the operating element (24).

5. Distribution or connection cabinet as claimed any of the above-mentioned claims, **wherein** the fixing elements (4) are designed as fastening bows which engage into a cavity (11) of the bar casing, wherein the fixing elements (4) turn or, respectively, swivel around and axis running in perpendicular direction with regard to the bottom of the distribution cabinet, and wherein the swivelling movement of the fastening bows is brought about by the eccentric location of the bearing point.

6. Distribution or connection cabinet (1) for bus bars in low-voltage bar distributors, comprising in particular a blocking device (17) blocking the sliding cover (18) as claimed in claim 1, including a protective device (40) to prevent accidental contact with parts under voltage, and a casing that is subdivided into an equipment compartment (14) and a connection compartment (15) by means of a separating wall (13), with a sliding cover (18) covering either the equipment compartment (14) or the connection compartment (15), **wherein** the protective device (40) consists of elements which can be extended into the receiving room between the connection lug contacts (40) or of scanning fingers (70) which cause the sliding cover (18) to be blocked when they withdraw and to be released when they extend downwards.

7. Distribution or connection cabinet as claimed in claim 6, **wherein** the plungable element or the scanning fingers (70) can be plunged by means of a turning movement.

8. Distribution or connection cabinet as claimed in claims 6 or 7, **wherein** the plungable elements or the scanning fingers (70) are fixed at a U-shaped scanning element (49) with bow-shaped lateral legs arranged downward, while the lateral legs can rest upon a surface running in parallel with regard to the cover (9), and wherein the scanning fingers (70) are fixed at a scanning element, while the scanning element is movable via two bearing points (65, 66) arranged behind one another.

9. Distribution or connection cabinet as claimed in any claim 6 through 8, **wherein** the protective device (40) consists of a retaining profile (61) located approximately above the separating wall (13), of a blocking element (62) fixed in a swivelling way and including two lateral sections (63) and a transverse section (64), while the lateral sections (63) each have a cut (62) which presents an edge that blocks the sliding cover (18), and wherein a blocking element (62) of the protective device (40) presents an edge (50) which is rounded toward the inside in such a way that the sliding cover (18) ends vertically at the edge (50) in every blocked position.

## Revendications

1. Boîte de jonction ou de sortie (1) pour barres conductrices dans des tableaux de dis tribution à barres sous basse tension, avec des éléments de fixation et avec un boîtier subdivisé par une paroi de séparation (13) en une chambre d'appareil (14) et une chambre de raccordement (15), un couvercle coulissant (18) recouvrant soit la chambre d'appareil (14), soit la chambre de raccordement (15) et pouvant être verrouillé au moyen d'un dispositif de verrouillage (17), **caractérisée en ce que** les éléments de fixation (4) peuvent être bloqués avec le dispositif de verrouillage (17), une barre de verrouillage (73) du dispositif de verrouillage (17) retenant l'arrière du couvercle coulissant (18) en position de non-blocage (fig.6c, 6d) des éléments de fixation (4).

2. Boîte de jonction ou de sortie selon revendication 1, **caractérisée en ce que** la barre de verrouillage (73) peut s'engager dans un évidement (52) d'une pièce de manoeuvre (24) destinée à actionner les éléments de fixation (4), en ce que le haut de la barre de verrouillage (73) est pourvu d'une manette, ladite barre de verrouillage étant exécutée en tant que tige de verrouillage et de manipulation (17).

3. Boîte de jonction ou de sortie selon revendication 1 ou 2 **caractérisée en ce que** la barre de verrouillage (73) est soumise à l'action d'un ressort à deux endroits, et qu'en position de repos elle est engagée dans l'évidement (52) tout en retenant l'ar rière du couvercle coulissant (18) (fig.6b), et en ce que la barre de verrouillage (73) est sculante et accrochable (fig.6c).

4. Boîte de jonction ou de sortie selon l'une des revendications précédentes, **caractérisée en ce que** la barre de verrouillage (73) coulisse sur une bordure de rappel (74) disposée sur la pièce de manoeuvre (24), de la position de basculement (fig.6c) en position verticale (fig.6d).

5. Boîte de jonction ou de sortie selon l'une des revendications précédentes, **caractérisée en ce que** les éléments de fixation (4) sont exécutés en tant qu'étriers de fixation s'engageant dans une gorge (11) du Boîtier à barres, en ce que les éléments de fixation (4) sont mobiles et pivotants autour d'un axe perpendiculaire au fond de boîte de sortie et en ce que le mouvement de pivotement des étriers de fixation est produit par un point d'appui disposé excentriquement.

6. Boîte de jonction ou de sortie (1) pour barres conductrices dans des tableaux de dis tribution à barres sous basse tension, en particulier avec un dispositif de verrouillage (17) bloquant le couvercle coulissant (18) selon revendication 1, avec un dispositif de protection (40) afin d'empêcher le contact des pièces sous tension et avec un boîtier subdivisé par une paroi de séparation (13) en une chambre d'appareil (14) et une chambre de raccordement (15), un couvercle coulissant (18) recouvrant soit la chambre d'appareil (14) soit la chambre de raccordement (15), **caractérisé en ce que** le dispositif de protection (40) consiste en éléments insérables dans l'espace de réception entre les contacts à barrettes (69), ou en doigts de balayage (70) ayant pour effet de libérer le couvercle coulissant (18) lors de l'engagement, et de bloquer celui-ci lors du dégagement.

7. Boîte de jonction ou de sortie selon revendication 6 **caractérisée en ce que** l'élément insérable ou les doigts de balayage (70) peuvent être engagés par mouvement de rotation.

8. Boîte de jonction ou de sortie selon revendication 6 ou 7, **caractérisée en ce que** les éléments insérables ou doigts de balayage (70) sont fixés à une pièce de balayage en forme de U (49) à côtés latéraux arqués disposés vers le bas, les côtés latéraux pouvant prendre appui sur une surface parallèle au
couvercle (9) et en ce que les doigts de balayage (70) sont fixés à une pièce de ba layage, ladite pièce de balayage étant mobile sur deux points d'appui (65, 66) disposés l'un derrière l'autre.

9. Boîte de jonction ou de sortie selon l'une des revendications 6 à 8, **caractérisée en ce que** le dispositif de protection (40) consiste en un profilé d'arrêt (61) disposé à peu près au-dessus de la paroi de séparation (13), en une pièce de blocage (62) fixée de manière à pouvoir pivoter avec deux segments latéraux (63) et un segment transversal (64), les segments latéraux (63) étant respectivement pourvus d'une encoche (62), ladite encoche présentant une bordure de blocage du couvercle coulissant (18), et en ce qu'une pièce de blocage (62) du dispositif de protection (40) présente une bordure (50) arrondie vers l'intérieur, de sorte que le couvercle coulissant (18) pousse perpendiculairement contre la bordure (50) dans chaque position de blocage.
